**Europäisches Patentamt**

(19) **European Patent Office**

**Office européen des brevets**

(11) Veröffentlichungsnummer: **0 080 141**
**B1**

(12) # EUROPÄISCHE PATENTSCHRIFT

(45) Veröffentlichungstag der Patentschrift:
01.04.87

(21) Anmeldenummer: **82110516.0**

(22) Anmeldetag: **15.11.82**

(51) Int. Cl.⁴: **C 09 J 3/06**

(54) Verfahren zur Herstellung von Klebstoffmischungen sowie deren Verwendung zur maschinellen Etikettierung.

(30) Priorität: **23.11.81 DE 3146364**
**13.02.82 DE 3205211**
**13.02.82 DE 3205210**

(43) Veröffentlichungstag der Anmeldung:
**01.06.83 Patentblatt 83/22**

(45) Bekanntmachung des Hinweises auf die Patenterteilung:
**01.04.87 Patentblatt 87/14**

(84) Benannte Vertragsstaaten:
**AT BE CH DE FR GB IT LI LU NL SE**

(56) Entgegenhaltungen:
**DE - A - 2 364 438**
**US - A - 3 331 697**

**CHEMICAL ABSTRACTS, Band 92, Nr. 12, 24. März 1980,**
**Seite 90, Nr. 95922p, Columbus, Ohio, USA**
**CHEMICAL ABSTRACTS, Band 97, Nr. 12, 20. September**
**1982, Seite 68, Nr. 93658m, Columbus, Ohio, USA**

(73) Patentinhaber: **Henkel Kommanditgesellschaft auf**
**Aktien, Postfach 1100 Henkelstrasse 67,**
**D-4000 Düsseldorf-Holthausen (DE)**

(72) Erfinder: **Andres, Johannes, Bonner Strasse 14,**
**D-4000 Düsseldorf (DE)**
Erfinder: **Hasenkamp, Rainer, Dr., Alte Kölner Strasse 8,**
**D-4006 Erkrath 2 (DE)**
Erfinder: **Merkel, Heinrich, Stahlhausener Strasse 30,**
**D-4006 Erkrath (DE)**

## Beschreibung

Die Erfindung betrifft die Herstellung von neuen wässrigen Klebstoffzubereitungen auf Basis von Stärkederivaten sowie deren Anwendung zum maschinellen Etikettieren, insbesondere von Glasflaschen auf schnell laufenden Automaten.

Die Verwendung von Stärke-, Dextrin- und Kaseinleimen zum Etikettieren von Glasbehältern ist bekannt. Stärkeleime stellen einfache Klebstoffsysteme dar und ergeben im allgemeinen Verklebungen mit guter Schwitzwasserfestigkeit. Zum maschinellen Etikettieren ist allerdings die Einstellung einer Kombination zahlreicher Eigenschaften zwingende Voraussetzung. Sowohl während der Verarbeitungsstufe als letztlich im etikettierten Fertigprodukt werden eine Vielzahl von Anforderungen an das Klebmittel gestellt. Bei der Verarbeitung muss der Klebstoff befähigt sein, hinreichend zu fliessen und gleichzeitig genügende Haftfestigkeit zu besitzen, um über die mit schnell rotierenden Vorrichtungselementen arbeitenden Maschinen verarbeitet werden zu können. Trotz hinreichend niedriger Viskosität soll der nasse Klebstoff eine hohe Anfangsklebkraft besitzen, die eine unerwünschte Verschiebung des noch frisch beleimten Etiketts auf dem Empfangskörper verhindert. Die Klebekraft des aufgetrockneten Etiketts wird dann im Gebrauch der etikettierten Flasche zahlreichen Belastungen unter zusätzlicher Einwirkung von Feuchtigkeit ausgesetzt, denen die Verklebung standhalten muss.

Zum maschinellen Etikettieren ist es im allgemeinen erforderlich, bestimmte Viskositätsbereiche von beispielsweise etwa 20 000 bis 200 000 mPa·s einzustellen, wobei Bereiche bis zu 100 000 mPa·s und vorzugsweise der Bereich zwischen etwa 20 000 und 70 000 mPa·s besonders geeignet sein können. Um solche Viskositätsbereiche mit Stärkeleimen nicht zu überschreiten, kommen hier im allgemeinen Feststoffgehalte von höchstens 30 Gewichtsprozent in Frage. Durch den daraus resultierenden hohen Wassergehalt sind diese Stärkeleime nicht mit der erforderlichen hohen Anfangsklebkraft ausgestattet.

Die vorstehend geschilderten Nachteile weisen die zum Etikettieren häufig benutzten Kaseinleime nicht auf. Im Vergleich zu Stärke- und Dextrinleimen ist die Herstellung von Kaseinleim – bedingt durch den Rohstoffpreis – jedoch teuer. Ausserdem ist Kasein als tierisches Produkt in seinen Eigenschaften gewissen Schwankungen unterworfen, so dass das Bedürfnis besteht, Kasein mindestens anteilsweise durch andere klebende Substanzen mit insbesondere sicher einstellbaren und reproduzierbaren Eigenschaften zu ersetzen, die noch dazu wirtschaftlicher als Kasein sind.

Von dieser Aufgabenstellung ausgehend schlägt die Erfindung ein neues zweischrittiges Verfahren zur Herstellung von Klebstoffmischungen auf Basis bestimmter ausgewählter Stärkederivate als Hauptklebstoffkomponente vor. Die Verfahrensprodukte eignen sich besonders für die Verwendung bei der maschinellen Etikettierung in schnell laufenden Automaten.

Gegenstand der Erfindung ist ein Verfahren zur Herstellung von Klebstoffmischungen auf Basis von Stärkederivaten mit einem Gehalt an die Fliessfähigkeit regulierenden Mitteln und gegebenenfalls weiteren üblichen Zusatzstoffen, dadurch gekennzeichnet, dass man

– in der Lösung einer in wässriger Phase gelösten Polymerverbindung aus der Gruppe wasserlösliche Cellulosederivate, Kasein und synthetische Polymere in einer Menge von 0,1 bis 10 Gewichtsprozent, bezogen auf die fertige Klebstoffmischung

– soviel eines Hydroxyalkylethers oxidativ abgebauter Stärke eines MS zwischen 0,01 bis 0,1 auflöst, dessen Viskosität in 25 gewichtsprozentiger Lösung bei 65°C im Bereich von 40 bis 200 mPa·s (Drage-Rheomat 15) liegt, wobei

– der Gesamtfeststoffgehalt der Klebstoffmischung zwischen 30 bis 60 Gewichtsprozent und die Viskosität zwischen 20 000 und 200 000 mPa·s bei 25°C beträgt.

Ein wesentliches die Erfindung kennzeichnendes Merkmal liegt in der Verwendung der bestimmten Hydroxyalkylether oxidativ abgebauter Stärke. Charakteristisch für diese Stärkeether ist ihre sehr geringe Substitution mit Hydroxylalkylethergruppen, die im Bereich von 0,01 bis 0,1 liegt. Als Hydroxyalkyletherreste kommen insbesondere Hydroxyethyl- und Hydroxypropylreste in Betracht, wobei insbesondere mit Oxypropyletherresten substituierte oxidativ abgebaute Stärke bedeutungsvoll ist. Die wichtigsten Stärkeether weisen einen MS im Bereich von etwa 0,05 bis 0,1 auf.

Die Hydroxyalkylstärkeether sind weiterhin durch ihre Viskosität charakterisiert. Geeignet sind solche Stärkeether mit einer Viskosität – bestimmt in wässriger Lösung im Drage-Rheomat 15 bei 65°C und 25 Gewichtsprozent Feststoffgehalt – im Bereich von 40 bis 200 mPa·s, insbesondere im Bereich von 50 bis 140 mPa·s.

Es ist dabei möglich, nur einen bestimmten Hydroxyalkylstärkeether der genannten Art einzusetzen. Allerdings können auch mehrere Hydroxyalkylether oxidativ abgebauter Stärken zur Verwendung kommen, soweit die eingesetzten Produkte – in Abstimmung ihrer individuellen Eigenschaften und ihrer Mengenverhältnisse zueinander – wässrige Lösungen des angegebenen Drage-Viskositätsbereichs ergeben.

Wässrige Lösungen dieser Kleberkomponenten – vorstehend definierte Stärkeether – alleine sind allerdings zur Lösung der erfindungsgemässen Aufgabe nicht hinreichend. Die Erfindung sieht dementsprechend weiter die Mitverwendung der zuvorgeschilderten Komponenten in wässriger Phase gelöste Polymerverbindungen vor, die eine oder mehrere Verbindungen aus der Gruppe wasserlösliche Cellulosederivate, Kasein und synthetische wasserlösliche Polymere sein können.

Von entscheidender Bedeutung ist dabei, dass es einer ganz bestimmten Art der Verarbeitung dieser Komponenten bei der Herstellung der erfindungsgemässen Klebstoffmischungen bedarf, um zu einer Steuerbarkeit der Klebereigenschaften im Sinne der erfindungsgemässen Aufgabenstellung insgesamt zu kommen. Erforderlich ist, dass die zuvor definierte erfindungsgemässe lösliche Polymerkomponente in der wässrigen Phase gelöst vorliegt, bevor der Hydroxyalkylstärkeether oder wesentliche Anteil davon aufgelöst werden. Es hat sich im Rahmen der Erfindung überraschenderweise gezeigt, dass bei dieser bestimmten Reihenfolge, d.h. der Auflösung von zunächst bestimmten Polymerverbindungen und anschliessend die Auflösung der Hydroxyalkylstärkeether in der wässrigen Phase dieser Polymerverbindungen ganz bestimmte die Struktur verbessernde Wirkungen eintreten. Wird die erfindungsgemäss vorgesehene Reihenfolge der Auflösung eingehalten, dann wirkt die wässrige Lösung bestimmter Polymerverbindungen viskositätssenkend und/oder das Fliessverhalten verbessernd. Die ohnehin allerdings relativ schwache Neigung zur Retrogradation der mit Hydroxyalkylethergruppen substituierten Stärke wird weiter abgeschwächt. Interessanterweise wirkt gleichzeitig im allgemei-nen die Polymerverbindung auch klebkrafterhö-hend und damit also durchaus im Sinne der erfindungsgemässen Aufgabenstellung.

Der Hydroxyalkylether von Stärke liegt im fertigen Klebstoff in Mengen von etwa 15 bis 50 Gewichtsprozent vor, wobei der Mengenbereich von etwa 25 bis 40 Gewichtsprozent – jeweils bezogen auf die fertige Klebstoffmischung – bevorzugt ist. Demgegenüber wird die erfindungsgemässe Komponente aus der bestimmten Gruppe der wasserlöslichen Polymerverbindungen zweckmässigerweise in geringeren Mengen eingesetzt. Bevorzugt liegen die Mengen im Bereich von etwa 0,1 bis 10 Gewichtsprozent, insbesondere im Bereich von 0,5 bis 6 Gewichtsprozent – auch hier jeweils bezogen auf das Gewicht der fertigen Klebstoffmischung. In Sonderfällen kann es allerdings möglich sein, auch höhere Mengen einzusetzen, beispielsweise bis zu 20 oder auch 25 Gewichtsprozent.

Zu einer Untergruppe der wasserlöslichen Poly-merverbindungen gehören wasserlösliche syn-thetische Polymere wie Homo- und/oder Copolymerisate, die Vinylalkohol- und/oder Vinylpyrrolidon- und/oder Acrylamid- und/oder substituierte Acrylamidgruppen enthalten. Geeignet sind aber auch Homo- und/oder Copolymerisate der Acrylsäure bzw. der (Meth)acrylsäure oder wasserlöslichen Salze dieser Säuren. Im einzelnen sind hier als synthetische wasserlösliche Polymere bei-spielsweise Polyvinylalkohol mit einem Versei-fungsgrad von etwa 70 bis 98% und einem Viskositätswert von 2 bis 100 mPa · s, bevorzugt 4 bis 18 mPa · s der 4%igen wässrigen Lösung, Polyvinylpyrrolidon, Copolymere des Vinylpyrrolidons mit Vinylacetat und Vinyllaurat, Polyacrylamid, Copo-lymere des Acrylamids mit Methacrylamid, N-Methylolacrylamid, N-Ethylacrylamid, N-Propyl-acrylamid, N-Butylacrylamid, Dimethylamino-ethylmethacrylat, Acrylsäure, (Meth)acrylsäure, Acrylnitril, Acrylsäuremethyl- und -ethylester, (Meth)acrylsäuremethylester, Polyacrylsäure, Copolymere der Acrylsäure mit Acrylnitril, Acrylsäuremethyl- und -ethylester bzw. deren Alkali- und Ammoniumsalze zu nennen.

Das Gewichtsverhältnis des wasserlöslichen synthetischen Polymeren zum Hydroxyalkylstärkeether liegt üblicherweise im Bereich von 1 : 2 bis 1 : 50, wenn auch in Sonderfällen geringere Mengen des wasserlöslichen synthetischen Polymeren zur Verwendung kommen können.

Zu einer weiteren Untergruppe der wasserlösli-chen Polymerverbindungen gehören wasserlösli-che Cellulosederivate. Als wasserlösliche Cellu-losederivate kommen insbesondere Carboxyme-thylcellulosen, Hydroxyalkylcellulosen und/oder Mischether der genannten Cellulosederivate bzw. ihre wasserlöslichen Salze in Betracht. Im einzelnen seien genannt Carboxymethylcellulose und ihre wasserlösliche Salze, Hydroxyethylcellulose und/oder Hydroxypropylcellulose, Mischether von Cellulose wie Methylhydroxyethylcellulose, Me-thylhydroxypropylcellulose und/oder Carboxyme-thylmethylcellulose bzw. deren wasserlösliche Salze.

Die Cellulosederivate sind Celluloseether mit Substitutionsgraden üblicherweise im Bereich von 0,1 bis 3. Bevorzugt sind solche Cellulosederivate, deren Viskosität – 2 gewichtsprozentige Lösung bei Normaltemperatur – zwischen 200 und 5000 mPa · s liegt und die einen Flockungspunkt über 60 °C, vorzugsweise über 80 °C aufweisen.

Auch hier liegt das Gewichtsverhältnis des was-serlöslichen synthetischen Polymeren zum Hy-droxyalkylstärkeether im Bereich zwischen 1 : 50, wobei aber auch hier in Sonderfällen schon geringere Mengen in Frage kommen.

Zur dritten Untergruppe der wasserlöslichen Polymerverbindungen gehört Kasein. Gegenüber üblichen Kaseinklebern zeichnen sich die erfindungsgemäss herstellbaren Klebstoffmischungen durch ihren vergleichsweise sehr viel geringeren Gehalt an Kasein aus. Das bevorzugte Gewichts-verhältnis von Kasein zum Hydroxyethylstärke-ether soll im Bereich von etwa 1 : 15 bis 1 : 2 liegen. Weiterhin soll der Kaseingehalt des Klebstoffgemisches bevorzugt im Bereich von etwa 0,1 bis 10 Gewichtsprozent, insbesondere 1 bis 10 Gewichtsprozent, bezogen auf die fertige Klebstoffmischung, liegen.

In an sich bekannter Weise kann die Fliessfähigkeit durch Zusatz bestimmter wasserlöslicher nie-dermolekularer Verflüssiger reguliert werden. Be-kannt ist hier Harnstoff, Thioharnstoff und/oder Dicyandiamid den Stärkeklebern zuzusetzen, aber auch der Zusatz anorganischer oder organischer Salze wie Halogenide, Nitrate, Sulfate, Acetate, Citrate oder Tartrate wirkt viskositätsregelnd. Verwiesen wird in diesem Zusammenhang beispielsweise auf «Fette, Seifen, Anstrichmittel» 1965, 845 bis 847, H. Hardert «Veränderung der Fliessfähigkeit von Klebelösungen und klebstoffhaltigen Bindemitteln» sowie auf «Handbuch der Stärke» V-1, R. Köhler, Stärkeklebstoffe, Verlag Paul Parey, 1971, Seiten 35 bis 37. Es ist bekannt, dass der Zusatz solcher niedrigmolekularer Verflüssiger sowohl viskositätssenkend wirkt und als auch sonstige rheologische Eigenschaften günstig beeinflussen kann. Gleichzeitig wird auch die unerwünschte Retrogradationsneigung des Stärkeklebers abgeschwächt.

Die bekannten niedermolekularen Mittel zur Regulierung der Fliessfähigkeit und insbesondere entsprechende anorganische Salze, Harnstoff, Thioharnstoff und/oder Dicyandiamid werden zweckmässigerweise in Mengen von etwa 2 bis 20 Gewichtsprozent, bevorzugt 5 bis 12 Gewichtsprozent, bezogen auf die fertige Klebstoffmischung eingesetzt.

Beim erfindungsgemässen Verfahren können weitere übliche Hilfsstoffe in den Klebstoffgemischen vorgesehen sein. Genannt seien Netzmittel bzw. Benetzungshilfen, Entschäumer und Konservierungsmittel, Füllstoffe und dergleichen. Solche üblichen Zusatzstoffe können beispielsweise ebenfalls in Mengen von etwa 0,3 bis 20 Gewichtsprozent – bezogen auf die fertige Klebstoffmischung – vorliegen.

Tatsächlich sind erfindungsgemäss herstellbare Klebstoffgemische selbst bei hohen Feststoffgehalten bis zu etwa 60 Gewichtsprozent gut fliessend, die Retrogradationsneigung der Stärkederivate ist stark unterdrückt, die Viskosität liegt verhältnismässig niedrig und ist noch dazu auf vorbestimmte Werte einstellbar. Gleichzeitig ist aber die Klebkraft dieser Stoffmischungen hoch. Es liegt hier also eine optimale Kombination von Eigenschaften für das Gebiet der Erfindung vor.

Der Gesamtfeststoffgehalt der erfindungsgemäss herstellbaren Klebstoffe liegt bevorzugt im Bereich von etwa 30 bis 60 Gewichtsprozent. Die Viskosität der fertigen Klebstoffe bzw. Leime liegt üblicherweise im Bereich von etwa 20 000 bis 200 000 mPa·s, insbesondere im Bereich von etwa 20 000 bis 100 000 mPa·s bei 25°C nach Brookfield.

Beim erfindungsgemässen Herstellungsverfahren für die neuen Klebstoffgemische können die genannten Hilfsstoffe sowohl beim ersten Schritt (Vorlösung) als auch beim zweiten Schritt (Lösung der Hydroxyalkylstärkeether) zugesetzt werden. Wichtig ist, dass nach der angegebenen zweischrittigen Lösungsmethodik verfahren wird, um zu einem in der Viskosität für die maschinelle Etikettierung akzeptablen und gleichzeitig ausreichend klebkräftigen Leim zu gelangen. Werden alle Bestandteile des Leims in einem Einschrittverfahren gleichzeitig aufgelöst, so resultieren in der Viskosität wesentlich höher liegende bzw. inhomogene oder schlecht fliessende Produkte, die sich zum maschinellen Etikettieren nicht eignen.

Im Rahmen des erfindungsgemässen Verfahrens kann es zweckmässig sein, durch Erwärmen des Klebstoffgemisches auf Temperaturen oberhalb von 70 bis etwa 90°C gegebenenfalls vorliegende zusätzliche Stärkederivate bzw. native Stärke oder nur leicht abgebaute Stärke zu lösen. Es kann ein Klebstoffansatz, der neben sehr guter Lagerstabilität ein besonders günstiges Fliessverhalten aufweist, resultieren.

Die erfindungsgemäss herstellbaren Klebstoffe besitzen Stoffeigenschaften, wie sie bisher nur von Klebstoffen mit überwiegendem Gehalt an Kasein erreicht werden konnten. Die Erfindung ermöglicht es damit unter Erhalt der charakteristischen und erforderten Eigenschaften üblicher Kaseinetikettierklebstoffe auf die Verwendung von Kasein vollständig oder überwiegend zu verzichten.

Beispiele

Die nachfolgend näher beschriebenen Klebstoffansätze wurden hergestellt, in einem mittels Wasserbad beheizbaren und gegebenenfalls kühlbaren 1000 ml fassenden Becherglas, das mit einem Rührwerk ausgestattet war. Das in den Beispielen verwendete Wasser hatte 16° d.H.

Beispiel 1

In 79 g Wasser (16° dH) wurden 39,2 g Harnstoff und 19,6 g Kasein verteilt. Nach Zugabe von 0,3 g 1,2-Benzisothiazolin-3-on und 1 g Antischaummittel (Basis Fettalkohol) wurde im Wasserbad auf 80°C unter Rühren erwärmt. Dann wurde 1,0 g Borax zugegeben und weitere 10 Minuten bei 80°C solange gerührt, bis eine vollständige Auflösung des Kaseins eingetreten war.

Man liess den Ansatz auf 40°C erkalten und ersetzte verdampftes Wasser.

In einem weiteren Verfahrensschritt wurden dann nach Zugabe von 100 g Wasser 20 g Maisstärke und 30 g eines kationischen Stärkeethers Umsetzungsprodukt mit 3-Chlor-2-hydroxypropyltrimethylammoniumchlorid, D3 = 0,03 und 150 g Hydroxypropylether von oxidierter Kartoffelstärke MS 0,08, Viskosität einer 20%igen Lösung 30 mPa·s bei 65°C nach Drage, entsprechende Viskosität der 25 gewichtsprozentigen Lösung 58 mPa·s bei 65°C eingerührt. Diese Suspension wurde dann mittels Wasserbad auf 75°C unter stetigem Rühren erwärmt. Nachdem man 10 Minuten bei dieser Temperatur belassen hatte, wurde auf 40°C abgekühlt und 10 g Saccharose zugegeben. Die fertige Klebstofflösung wurde dann durch Wasserzugabe auf einen Feststoffgehalt von 47,5%, der mittels Refraktometer ermittelt wurde, eingestellt.

Das Produkt hatte bei 25°C eine Viskosität von 60 000 mPa·s nach Brookfield.

Mit diesem Klebstoff wurden über 4 Stunden auf einem Hochleistungsetikettierautomaten bei einer Geschwindigkeit von 45 000 Flaschen pro Stunde feuchte, etwa 6°C warme Bierflaschen (Euro-Form) etikettiert, wobei Bauch- und Brustetiketten aufgebracht wurden. Die Leimversorgung erfolgte mittels Pumpe, die Leimtemperatur betrug nach Verlassen der vorgeschalteten Heizstation 29°C. Es wurde praktisch kein Verrutschen der Etiketten sowie keinerlei späteres Abplatzen beobachtet.

Beispiel 2

Zu einer Vorlage von 92,5 g Wasser wurden unter Rühren gegeben 54,94 g Harnstoff, 1,15 g Borax sowie 22,96 g Kasein. Ausserdem wurden 1,15 g eines Entschäumers auf Basis von Fettalkohol und 0,3 g des 1,2-Benzisothiazolin-3-ons zugefügt. Nachdem auf 80°C aufgeheizt worden war, wurde 20 Minuten bei dieser Temperatur belassen.

Nach dem Abkühlen auf 40 °C wurde das verdampfte Wasser ersetzt (84 g Wasser) sowie 120 g Maisstärke und 115 g Hydroxypropylether einer oxidierten Kartoffelstärke (Beispiel 1) eingerührt. Nachdem dieser Ansatz bei 70 °C 15 Minuten gerührt worden war, wurden weitere 83 g Wasser zugefügt.

Das erhaltene Klebstoffprodukt hatte bei 25 °C eine Viskosität von 80 000 mPa · s nach Brookfield. Es wurde zum maschinellen Etikettieren von 15 °C warmen und feuchten Flaschen eingesetzt. Der Leim hatte nach Verlassen der Heizstation eine Temperatur von 32 °C.

Vergleichsversuch A

Es wurden die gleichen Mengen der Rohstoffe gemäss Beispiel 2 verwendet, jedoch in das vorgelegte Wasser nacheinander unter Rühren die Maisstärke, der Harnstoff, das Borax, der Hydroxypropylether der oxidierten Kartoffelstärke, das Kasein und der Entschäumer sowie das Konservierungsmittel eingetragen.

Nach Rühren bei 80 °C während 30 Minuten liess man erkalten. Es wurde ein Produkt erhalten, das bei Zimmertemperatur zäh pastös war und nach Brookfield eine Viskosität bei 25 °C oberhalb von 1 000 000 mPa · s hatte. Dieses Produkt war als Klebstoff aufgrund der Konsistenz nur schwer verwendbar. Ein Einsatz auf Etikettiermaschinen war nicht möglich. Wurde durch Verdünnen mit Wasser eine zum Maschinenauftrag geeignete Viskosität eingestellt, war die Klebfähigkeit unzureichend.

Vergleichsversuch B

Es wurde ein Ansatz hergestellt, wobei in folgender Reihenfolge gemischt wurde (Rühren bei 75 °C): 100 g Wasser, 50 g Harnstoff, 59 g kationische Stärke, 176 g Hydroxypropylether der oxidierten Kartoffelstärke gemäss Beispiel 1, 1 g Entschäumer auf Mineralölbasis, 0,2 g Benzisothiazolin-3-on, 106 g Wasser und 12 g Zucker.

Nach Abkühlen auf 40 °C wurden 120 g einer 50 gewichtsprozentigen wässrigen Lösung des gleichen mittelkochenden Kartoffel-Gelbdextrins eingetragen. Das resultierende Produkt war nach siebentägiger Lagerung stark geliert und wies nach kräftigem Rühren eine Viskosität von über 1 500 000 mPa · s bei 25 °C nach Brookfield auf.

Aufgrund der Konsistenz war das Produkt für das maschinelle Etikettieren nicht geeignet.

Beispiel 3

Unter Rühren wurden in 100 g kaltes Wasser eingetragen:

30,0 g einer 40 gewichtsprozentigen Lösung von Polyvinylalkohol (Verseifungsgrad ca. 88 Mol-%; Viskosität einer 4%igen Lösung: 4 mPa · s bei 20 °C nach DIN 53015)

22,9 g Maisstärke, 6,5 g kationischer Kartoffelstärkeether (Umsetzungsprodukt mit 3-Chlor-2-hydroxypropyl-trimethylammoniumchlorid, DS = 0,03), 25 g Harnstoff, 88 g Hydroxypropylether einer oxidierten Kartoffelstärke gemäss Beispiel 1 und 1 g eines Entschäumers auf Basis Mineralöl. Nach Homogenisierung wurde für 15 Minuten auf 80 °C erhitzt und nach Abkühlen auf 50 °C 0,1 g 1,2-Benzisothiazolin-3-on zugesetzt.

Das so erhaltene Produkt hatte bei 25 °C eine Viskosität von ca. 60 000 mPa · s nach Brookfield und eignete sich zum maschinellen Etikettieren von kalten und warmen Flaschen auf schnellaufenden Automaten. Im Beobachtungszeitraum von 3 Monaten wurde keine Entmischung (Phasentrennung) des Produktes festgestellt.

Zum Vergleich wurde zunächst ohne Verwendung von Polyvinylalkohol der Stärkeaufschluss – wie vorstehend beschrieben – durchgeführt und nach Abkühlen auf 50 °C die Polyvinylalkohollösung eingerührt. Die entstandene Lösung (80 000 mPa · s) entmischte sich nach 3tägigem Stehen.

Beispiel 4

Unter Rühren wurden 172 g Wasser 48 g einer 16 gewichtsprozentigen Lösung von Polyacrylamid, 50 g Harnstoff, 59 g kationischer Kartoffelstärkeether, 176 g Hydroxypropylether von oxidierter Kartoffelstärke (s. Beispiel 3) und 2 g eines handelsüblichen Entschäumers auf Silikonbasis eingetragen und nach Homogenisieren auf 80 °C erhitzt. Nach 10minütigem Rühren wurde auf 40 °C abgekühlt und 0,3 g 1,2-Benzisothiazolin-3-on sowie 30 g native Kartoffelstärke eingetragen. Das resultierende Produkt hatte bei 25 °C eine Viskosität von ca. 70 000 mPa · s und eignete sich speziell zum hochtourigen Etikettieren von heissen Flaschen auf Automaten mit Leimpumpe und Heizung.

Zum Vergleich wurde zunächst wie vorstehend beschrieben der Stärkeaufschluss durchgeführt und nach Abkühlen auf 40 °C die Polyacrylamidlösung zugesetzt. Die so erhaltene Lösung hatte eine Viskosität von 180 000 mPa · s (bei sonst völlig gleicher chemischer Zusammensetzung) und hatte eine lange und zähe Struktur. Sie war zur Verwendung auf Etikettiermaschinen völlig ungeeignet.

Beispiel 5

Unter dauerndem Rühren wurden in 153,5 g Wasser 3 g Methylhydroxypropylcellulose (Substitutionsgrad: 19–24 Gewichtsprozent Methoxygruppen und 4–12 Gewichtsprozent Hydroxypropylgruppen; Viskosität einer 2 gewichtsprozentigen wässrigen Lösung ca. 15 000 mPa · s nach Brookfield RTV, 20 UpM) kalt gelöst. Nachdem der Ansatz homogen war, wurden nacheinander 22,9 g Maisstärke, 6,5 g eines kationischen Stärkeethers (Umsetzungsprodukt mit 3-Chlor-2-hydroxypropyltrimethylammoniumchlorid, DS = 0,03), 25 g Harnstoff, 88 g Hydroxypropylether von oxidierter Kartoffelstärke gemäss Beispiel 1 sowie 1 g eines handelsüblichen Entschäumers auf Silikonbasis eingerührt und homogen verteilt. Nach Aufheizen auf 70–80 °C wurde 15 Minuten gerührt, anschliessend auf ca. 40–50 °C abgekühlt und 0,1 g 1,2--Benzisothiazolin-3-on sowie fehlendes Wasser bis 300 g netto zugesetzt.

Das so erhaltene Produkt wies bei 30 °C eine Viskosität von ca. 40 000 mPa · s nach Brookfield auf. Es eignete sich zum Etikettieren von kalten und warmen Flaschen auf schnellaufenden Automaten, die mit Leimpumpe und Heizstation ausgerüstet waren.

Beispiel 6

Unter dauerndem Rühren wurden in 307 g Wasser 6 g Carboxymethylmethylcellulose (Substitutionsgrad: 27–29 Gewichtsprozent Methoxygruppen, 2–5 Gewichtsprozent Carboxymethylgruppen; Viskosität der 2 gewichtsprozentigen wässrigen Lösung bei 20 °C: 2000 mPa · s nach Brookfield RVT, 20 UpM), 45,8 g Maisstärke, 13 g kationischer Stärkeether (s. Beispiel 1), 176 g Hydroxypropylether der oxidierten Kartoffelstärke (s. Beispiel 1) sowie 2 g eines handelsüblichen Entschäumers auf Mineralölbasis eingetragen und solange gerührt, bis die Carboxymethylmethylcellulose vollständig gelöst war. Die anderen oben aufgeführten Stoffe blieben hierbei suspendiert. Nun erfolgte Zugabe von 40 g Harnstoff und 10 g Natriumnitrat, welche ebenfalls unter Rühren gelöst wurden.

Nach Aufheizen auf 80 °C und einer Rührzeit von 20 Minuten wurde der Ansatz auf 40 °C abgekühlt und 0,2 g 1,2-Benzisothiazolin-3-on sowie Wasser bis 600 g netto zugegeben.

Das resultierende Produkt wies bei 20 °C eine Viskosität von 80 000 mPa · s nach Brookfield auf und zeichnete sich durch hohe Lagerstabilität aus. Es eignete sich zum maschinellen Etikettieren von kalten bis heissen Flaschen auf schnellaufenden Automaten mit Leimpumpe ohne Heizung.

Zum Vergleich wurde zunächst – wie vorstehend beschrieben – der Stärkeaufschluss durchgeführt und nach Abkühlen auf 50 °C die noch fehlende Menge Carboxymethylmethylcellulose eingerührt. Es resultierte eine während weniger Tage immer zäher werdende Masse, die nach einer Woche inhomogen wurde.

Beispiel 7

In 190 g Wasser wurden unter Rühren 59 g kationischer Kartoffelstärkeether gemäss Beispiel 1, 30 g Polyvinylpyrrolidon (Molgewicht ca. 40 000), 176 g Hydroxypropylether der oxidierten Kartoffelstärke gemäss Beispiel 1 kalt homogen verteilt und solange gerührt, bis das Polyvinylpyrrolidon gelöst war. Die anderen Anteile waren zwar homogen verteilt, blieben aber in ungelöster Form suspendiert. Nach Zugabe von 2 g eines handelsüblichen Entschäumers auf Basis von Mineralöl wurde für 20 Minuten auf 90–95 °C erhitzt. Während der Abkühlphase auf ca. 50 °C wurden portionsweise 40 g Harnstoff sowie 10 g Zucker und 0,6 g 1,2-Benzisothiazolin-3-on eingetragen.

Das so erhaltene Produkt wurde nach Abkühlung auf 30 °C durch Zugabe einer 20%igen Harnstofflösung auf einen refraktometrischen Festkörpergehalt von 46,5% eingestellt und wies dann eine Viskosität von ca. 35 000 mPa · s nach Brookfield bei 20 °C auf. Es war besonders geeignet zur hochtourigen Etikettierung mässig kalter (15–20 °C) und warmer Flaschen auf Automaten mit Leimpumpe aber ohne zusätzliche Heizmöglichkeit.

## Patentansprüche

1. Verfahren zur Herstellung von Klebstoffmischungen auf Basis von Stärkederivaten mit einem Gehalt an die Fliessfähigkeit regulierenden Mitteln und gegebenenfalls weiteren üblichen Zusatzstoffen, dadurch gekennzeichnet, dass man
   – in der Lösung einer in wässriger Phase gelösten Polymerverbindung aus der Gruppe wasserlösliche Cellulosederivate, Kasein und synthetische Polymere in einer Menge von 0,1 bis 10 Gewichtsprozent, bezogen auf die fertige Klebstoffmischung
   – soviel eines Hydroxyalkylethers oxidativ abgebauter Stärke eines MS zwischen 0,01 bis 0,1 auflöst, dessen Viskosität in 25 gewichtsprozentiger Lösung bei 65 °C im Bereich von 40 bis 200 mPa · s (Drage-Rheomat 15) liegt, wobei
   – der Gesamtfeststoffgehalt der Klebstoffmischung zwischen 30 bis 60 Gewichtsprozent und die Viskosität zwischen 20 000 und 200 000 mPa · s bei 25 °C beträgt.

2. Verfahren zur Herstellung von Klebstoffmischungen auf Basis von Stärkederivaten nach Anspruch 1, dadurch gekennzeichnet, dass man als in wässriger Phase gelöste Polymerverbindungen Homo- und/oder Copolymerisate von Vinylalkohol, Vinylpyrrolidon, gegebenenfalls substituierten Acrylamid und/oder (Meth)acrylsäure bzw. ihren wasserlöslichen Salzen, Hydroxyalkylcellulosen und/oder deren Mischether einsetzt.

3. Verfahren zur Herstellung von Klebstoffmischungen nach Ansprüchen 1 und 2, dadurch gekennzeichnet, dass man als bekannte niedermolekulare Mittel zur Regulierung der Fliessfähigkeit Harnstoff, Thioharnstoff, Dicyandiamid, für diesen Verwendungszweck übliche anorganische und/oder organische wasserlösliche Salze in Mengen von 2 bis 20 Gewichtsprozent, bevorzugt 5 bis 12 Gew.-%, bezogen auf die fertige Klebstoffmischung, einsetzt.

4. Verwendung der Klebstoffgemische nach Ansprüchen 1 bis 3 zur maschinellen Etikettierung von Glaswaren, insbesondere zur Flaschenetikettierung.

## Claims

1. A process for the production of adhesive mixtures based on starch derivatives and containing fluidity regulators and optionally other standard additives, characterized in that
   – in a solution of a polymer compound – dissolved in the aqueous phase – from the group comprising watersoluble cellulose derivatives, casein and synthetic polymers in a quantity of from 0.1 to 10% by weight, based on the final adhesive mixture,
   – is dissolved such a quantity of a hydroxyalkylether of oxidatively degraded starch having an MS of from 0.01 to 0.1 of which the viscosity in the form of a 25% by weight solution at 65°C is from 40 to 200 mPa · s (Drage Rheomat 15),

– the total solids content of the adhesive mixture being from 30 to 60% by weight and its viscosity from 20,000 to 200,000 mPa · s at 25°C.

2. A process for the production of adhesive mixtures based on starch derivatives as claimed in Claim 1, characterized in that homo- and/or copolymers of vinyl alcohol, vinyl pyrrolidone, optionally substituted acrylamide and/or (meth)acrylic acid or water-soluble salts thereof, hydroxyalkyl celluloses and/or mixed ethers thereof are used as the polymer compounds dissolved in the aqueous phase.

3. A process for the production of adhesive mixtures as claimed in Claims 1 and 2, characterized in that urea, thiourea, dicyanodiamide and typical inorganic and/or organic water-soluble salts are used as the known low molecular weight fluidity regulators in quantities of from 2 to 20% by weight and preferably in quantities of from 5 to 12% by weight, based on the final adhesive mixture.

4. The use of the adhesive mixtures claimed in Claims 1 to 3 for the machine labelling of glassware, more especially bottles.

**Revendications**

1. Procédé de fabrication de mélanges d'adhésifs à base de dérivés d'amidon ayant une teneur en agents régulateurs de la fluidité et éventuellement en d'autres additifs usuels, caractérisé en ce que

– dans la solution d'un composé polymère dissous dans la phase aqueuse faisant partie du groupe de dérivés de cellulose solubles dans l'eau, de la caséine et de polymères synthétiques en une quantité de 0,1 à 10% en poids par rapport au mélange d'adhésifs terminé

– on dissout une quantité suffisante d'un éther hydroxyalcoylé d'amidon dégradé par oxydation ayant un MS compris entre 0,01 et 0,1 dont la viscosité en solution à 25% en poids à 65°C se situe dans l'intervalle de 40 à 200 mPa · s (au Rheomat Drage 15),

– la teneur totale en matière solide du mélange d'adhésifs étant comprise entre 30 et 60% en poids et la viscosité entre 20 000 et 200 000 mPa · s à 25°C.

2. Procédé de fabrication de mélanges d'adhésifs à base de dérivés d'amidon selon la revendication 1, caractérisé en ce qu'on utilise en tant que composés polymères dissous dans la phase aqueuse des homo- et/ou copolymères d'alcool vinylique, de vinylpyrrolidone, d'acrylamide éventuellement substituée et/ou d'acide (méth)acrylique ou de ses sels solubles dans l'eau, des hydroxyalcoylcelluloses et/ou leurs éthers mixtes.

3. Procédé de fabrication de mélanges d'adhésifs selon les revendications 1 et 2, caractérisé en ce qu'on utilise, comme agents connus à poids moléculaire inférieur pour la régulation de la fluidité, de l'urée, thiourée, dicyandiamide, des sels minéraux et/ou organiques usuels dans ce genre d'application, en des quantités de 2 à 20% en poids, de préférence de 5 à 12% en poids, par rapport au mélange d'adhésifs prêt à l'emploi.

4. Utilisation des mélanges d'adhésifs selon les revendications 1 à 3 pour l'étiquetage mécanique d'articles en verre, en particulier pour l'étiquetage des bouteilles.